# EUROPEAN PATENT APPLICATION

(11) **EP 4 730 611 A1**
(43) Date of publication of application: **22.04.2026**
(21) Application number: 24206807.0
(22) Date of filing: 16.10.2024
(51) Int. Cl.: H02K 1/14

(54) **ELECTRIC MOTOR, ASSEMBLY METHOD AND HOUSEHOLD APPLIANCE**

(71) Applicant: BSH Hausgeräte GmbH, 81739 München (DE)
(72) Inventor: Ivanak, Martin, 04012 Kosice (SK); Blaz, Robert, 06601 Humenne (SK); Farkas, Viliam, 07101 Michalovce (SK)

(57) **Abstract**

Disclosed is an electric motor, in particular a multi-phase electronically commutated direct current motor (EC motor), comprising a stator which active teeth and the passive teeth are arranged in at least two groups around a rotor axis of the motor, wherein each group contains at least two active teeth or two passive teeth, an assembly method and a household appliance.

## Description

The present invention relates to an electric motor, in particular in particular a multi-phase electronically commutated direct current motor (EC motor), an assembly method of an electric motor and a household appliance.

Electric motors, in particular in particular a multi-phase electronically commutated direct current motor (EC motor), is exemplary described in US 2015/0263572 A1. The motor has a plurality of rotor poles with active stator teeth and several passive stator teeth. The passive and active teeth are distributed alternating around the circumferential of the stator. It has been shown that by providing passive stator a motor torque can be increased.

The object of the present invention is to provide a compact high performance electronic motor, an assembly method of such motor and a powerful household appliance.

This is achieved by an electric motor with the features of claim 1, by an assembly method with the features of claim 10 and by a household appliance with the features of claim 11. Advantageous embodiments are disclosed in the dependent claims, the description and the figures.

According to the invention, an electric motor, in particular a multi-phase electronically commutated direct current motor (EC motor), comprises a stator with a stator yoke, a plurality of active teeth (active stator teeth) and a plurality of passive teeth (passive stator teeth). Each active teeth carries one coil. The passive teeth are free of any coil. The active teeth and the passive teeth are arranged in at least two groups around a rotor axis of the motor, wherein each group contains at least two active teeth or two passive teeth.

Due to the inventive arrangement of the active teeth and passive teeth, the motor is characterized by a high-performance, in particular by an increased motor torque and less vibrations caused by cogging torque.

Preferably, the both groups have the same number of teeth. In one embodiment one groups contains three active teeth and the other group contains three passive teeth. It is understood that different numbers of active and passive teeth can be provided.

By creating the active teeth and the passive teeth with different radial extension, the compactness and performance of the motor can be improved. Preferably, the active teeth have a first radial extension and the passive teeth have second radial extension, whereas the first radial extension of the active teeth is larger than the second radial extension of the passive teeth which enables the positioning of large coils on the active teeth.

In order to create an electric insulation between the active teeth and the coils, the coils can be arranged on the active teeth via plastic bobbins.

The performance of the motor can further be increased if the active teeth and/or the passive teeth have pole shoes. The length of the pole shoe can be adapted to the required motor torque and the required decrease of motor vibrations.

In order to facilitate the stator assembly, at least the active teeth are in form fit engagement with the stator yoke. One exemplary form fit engagement is a dovetail connection. Separating the active stator teeth with the pole shoe enables to wind the coils separately. Preferably, the passive teeth are integrally parts of the stator yoke.

The compactness of the motor can be improved, if between the form fit engagements, at the inner circumference of the stator yokes recesses are provided which can be used for positioning leading pins (lead pins), which are used for the connection/fixation of the windings of the coils at their beginnings and at their ends.

In order to enhance the motor performance further, a rotor of the motor has an isotropic ring with Halbach sinusoidal orientation. The ring can have in particular eight poles

By providing the pole shoes of active teeth and the pole shoes of the passive teeth with a uninform extension in circumferential direction, the performance of the motor is further enhanced.

According to one assembly method according to the invention, first, coils are wound on plastic bobbins. Then, active teeth are created by positioning the plastic bobbins carrying the coils on teeth. Finally, the active teeth are connected to a stator yoke via form fit engagement.

Such assembly method enables a simplified stator assembly as the coils are wound outside the stator yoke.

A household appliance according to the invention has an electric motor according to the invention. An exemplary household appliance is a blender or a multi-functional cooking machine.

In the following, preferred embodiments of the present invention are explained with respect to the accompanying drawings. As is to be understood, the various elements and components are depicted as examples only, may be facultative and/or combined in a manner different than that illustrated. Reference signs for related elements are used comprehensively and not defined again for each figure. Shown is schematically in
- Fig. 1:: a cross-sectional view of a motor according to the invention;
- Fig. 2:: a stator yoke of the motor;
- Fig. 3:: the stator yoke equipped with active teeth;
- Fig. 4:: a perspective front view of the stator carrying its coils;
- Fig. 5:: a perspective rear view of the stator carrying its coils; and
- Fig. 6:: an arrangement of poles at a rotor ring of the motor.

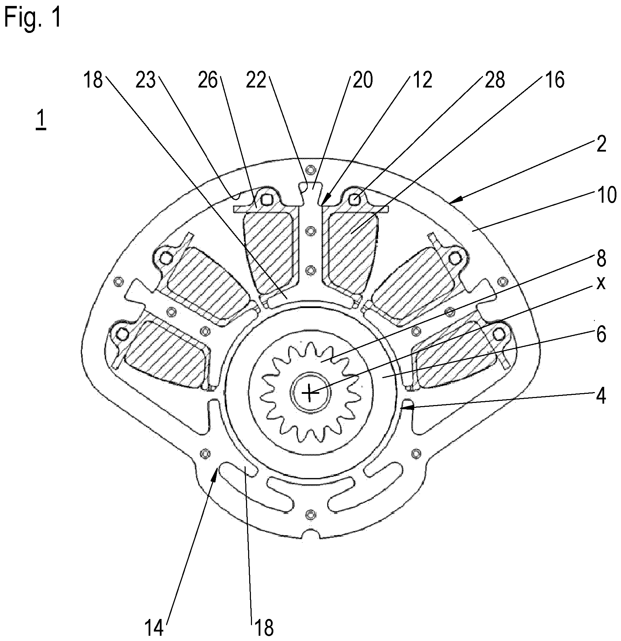

In Figure 1, a cross-section of an electric motor 1, in particular a, in particular a multi-phase electronically commutated direct current motor (EC motor) is shown. The motor 1 can be used for an electric household appliance. However, the motor 1 can also be used in the field of automotive/industry application.

It has a stator 2 and a rotor 4. The stator 2 surrounds the rotor 4 which is rotatable arranged around its longitudinal axis (rotor axis x) in the stator 2. Beside a shaft 6 of the rotor, an output wheel (pinion) 8 of the rotor 4 is illustrated which is fixed to the shaft 6.

The stator 2 basically comprises a stator yoke 10, a plurality of teeth 12, 14 and coils 16. Based on the fact, if the teeth 12, 14 are carrying one of the coils 16, they are so-called active stator teeth 12 (active teeth) or passive stator teeth 12 (passive teeth). The active teeth 12 carry the coils 16 and the passive teeth are free of any coil 16. Here, the same number of active teeth 12 and passive teeth 14 are provided, i.e. three of each kind of teeth 12, 14.

The teeth 12, 14 are arranged in two groups in circumferential direction around the rotor axis x, wherein one group comprises only the active teeth 12 and the other group comprises only the passive teeth 14.

The teeth 12, 14 extend radially to the rotor axis x and have pole shoes 18 extending to both sides in circumferential direction such that they have a T-like shape. As the active teeth 12 are being equipped with the coils 16, they have a larger radial extension than the passive teeth 14, however, their pole shoes might have the same extension in circumferential direction.

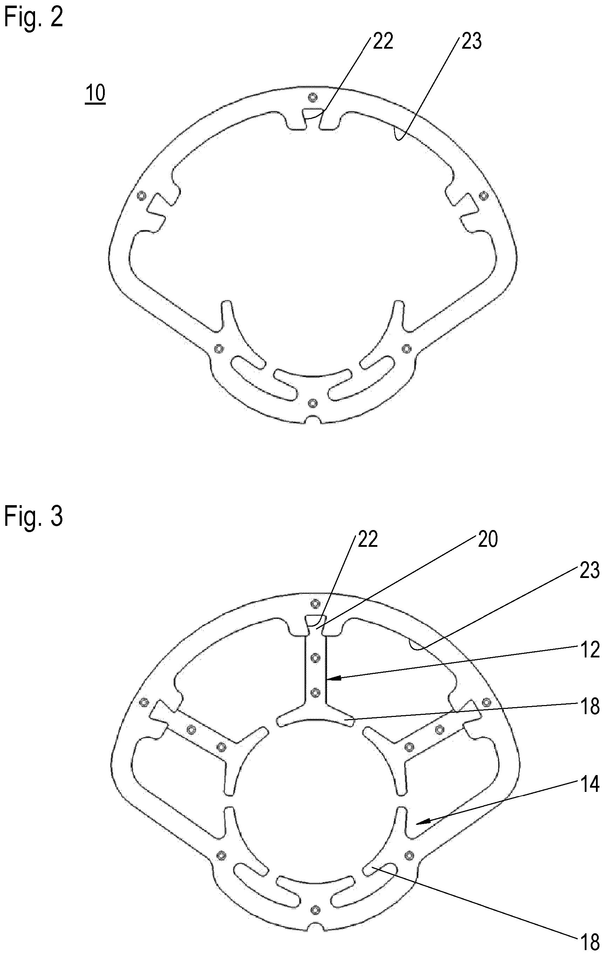

With reference to Figure 1, 2 and 3, the active teeth 12 are in form fit engagement with the stator yoke 10. The passive stator teeth 14 are integral parts of the stator yoke 10. Here, the form fit engagement is realized by dovetail connections, whereas the active teeth 12 engage with dovetail-like protrusions 20 in corresponding cutouts 22 in the stator yoke 10 of the stator yoke.

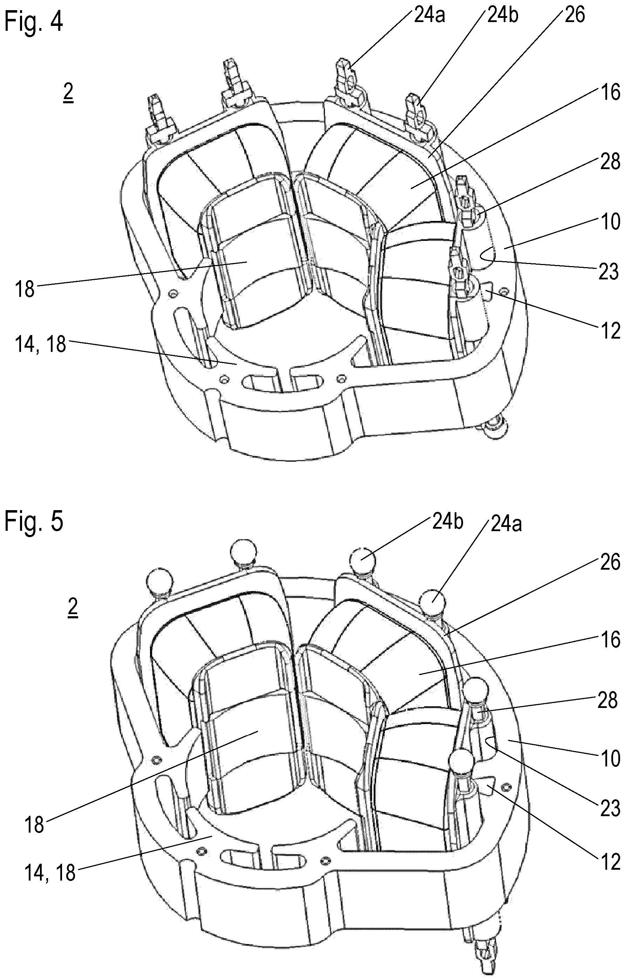

Between the form fit engagements of the active teeth 12, the stator yoke 10 is radially enlarged such that at its inner circumference additional space 23 (recesses) is provided for putting axially through leading pins 24a, 24b from the front to the rear side of the stator 2 for connecting electrically windings of the coils 16 (see Figures 1 to 5).

With reference to Figures 1, 4 and 5, the coils 16 are arranged on the active teeth 12 via plastic bobbins 26. The bobbins 24 forming a kind of cage for the coils 16 in such a way that the coils 12 are electrically insulated from the active teeth 12. They extend radially and axially over the entire extension of the active teeth 12. In order to place them on the active teeth 12, the bobbins 26 have a central opening 28 that correspondence to the outer shape of the active teeth 12 (without the pole shoes 18). In order to place the leading pins 24a, 26b, each bobbin 26 has two through holes 30a, 30b at its radial outer top.

In particular, the bobbins 26 are enlarged on the rear side which enables a comfortable stop face during the assembly of the stator 1 into a not shown actuator.

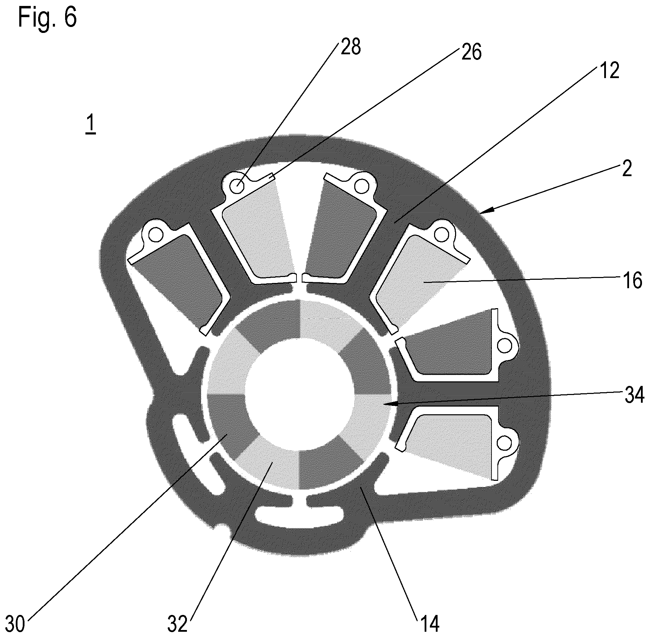

Figure 6 shows a preferred arrangement of eight poles 30, 32 at an isotropic rotor ring 34with Halbach sinusoidal orientation. As illustrated, the four north poles 30 and four south poles 32 are distributed alternating around the rotor axis x. The stator 1, in particular the coils 16 correspondence to this rotor pole arrangement.

According to the invention, during the assembly of the motor 1, the coils 16 are prepared by winding their windings on the plastic bobbins 26. Then, the active teeth 12 are produced by placing the bobbins 26 equipped with the coils 16 on the separated teeth 12. After that, the active teeth 12 equipped with the bobbins 16 are installed on the stator yoke 10 by creating the form fit engagement between their dovetail-shaped protrusions 20 and the corresponding stator yoke-10 sided cutouts 22.

Disclosed is an electric motor, in particular a multi-phase electronically commutated direct current motor (EC motor), comprising a stator which active teeth and the passive teeth are arranged in at least two groups around a rotor axis of the motor, wherein each group contains at least two active teeth or two passive teeth, an assembly method and a household appliance.

### Reference signs

- 1: motor
- 2: stator
- 4: rotor
- 6: shaft
- 8: output wheel
- 10: stator yoke
- 12: active teeth
- 14: passive teeth
- 16: coil
- 18: pole shoe
- 20: protrusion
- 22: cutout
- 23: circumferential space (recess)
- 24a, b: leading pin
- 26: plastic bobbin
- 28: opening
- 30: north pole
- 32: south pole
- 34: ring

- x: longitudinal axis (rotor axis)

## Claims

1. An electric motor (1), in particular a multi-phase electronically commutated direct current motor (EC motor), comprising a stator having:
• a stator yoke (10);
• a plurality of active teeth (12), each active tooth carries one coil (16);
• a plurality of passive teeth (14) which are free of any coil (16);
wherein
• the active teeth (12) and the passive teeth (12) are arranged in at least two groups around a rotor axis (x) of the motor (1), wherein each group contains at least two active teeth (12) or two passive teeth (14).

2. The electric motor according to claim 1, wherein both groups have the same number of teeth (12, 14).

3. The electric motor according to claims 1 or 2, wherein the active teeth (12) have a larger radial extension than the passive teeth (14).

4. The electric motor according to claims1, 2 or 3, wherein the coils (16) are arranged on the active teeth (12) via plastic bobbins (26).

5. The electric motor according to any of the preceding claims, wherein the active teeth (12) and/or passive (14) have pole shoes (18).

6. The electric motor according to claim 5, wherein the pole shoes (18) of active teeth (12) and passive teeth (14) have the same extension in circumferential direction.

7. The electric motor according to any of the preceding claims, wherein at least the active teeth (12) are in form fit engagement with the stator yoke (10).

8. The electric motor according to claim 7, wherein between the form fit engagements, at the inner circumference of the stator yokes (10) recesses (23) are provided.

9. The electric motor according to any of the preceding claims, wherein on the rotor (4) an isotropic ring (34) with Halbach sinusoidal orientation is provided.

10. A method for assembling a stator (1) according to any of the preceding claims, comprising the steps:
• Winding the coils (4) on plastic bobbins (26);
• Creating active teeth (12) by positioning the plastic bobbins (26) on teeth (12); and
• Mounting the active teeth (12) on a stator yoke via form fit engagement.

11. A household appliance comprising an electric motor with a motor (1) according to one of claims 1 to 9.
